# EUROPÄISCHE PATENTSCHRIFT

(11) **EP 3 767 152 B1**
(45) Veröffentlichungstag und Bekanntmachung des Hinweises auf die Patenterteilung: **07.06.2023**
(21) Anmeldenummer: 20182864.7
(22) Anmeldetag: 29.06.2020
(51) Int. Cl.: F16P 3/14, G01V 8/20

(54) **SICHERUNGSVORRICHTUNG FÜR EINE MASCHINE UND VERFAHREN ZUM BETREIBEN EINER SICHERUNGSVORRICHTUNG**
SECURING DEVICE FOR A MACHINE AND METHOD FOR OPERATING A SECURING DEVICE
DISPOSITIF DE FIXATION POUR UNE MACHINE ET PROCÉDÉ DE FONCTIONNEMENT D'UN DISPOSITIF DE FIXATION

(30) Priorität: 15.07.2019 DE 102019119137
(43) Veröffentlichungstag der Anmeldung: 20.01.2021
(73) Patentinhaber: Q-tec Prüfgeräte GmbH, 84367 Zeilarn (DE)
(72) Erfinder: ROTHENAICHER, Otto, 84367 Zeilarn (DE)
(74) Vertreter: Hofstetter, Schurack & Partner

(56) Entgegenhaltungen:
- EP-A1- 0 716 907
- EP-A1- 1 870 734
- EP-A1- 2 431 768

## Beschreibung

Die Erfindung betrifft eine Sicherungsvorrichtung für eine Maschine. Bevorzugt ist die Sicherungsvorrichtung als berührungslose Schutzeinrichtung ausgebildet. Ferner betrifft die Erfindung ein entsprechendes Verfahren zum sicheren Betreiben einer Maschine.

Trotz zunehmender Automatisierung werden immer noch Maschinen und Anlagen eingesetzt, welche eine manuelle Bedienung erfordern. Bei Maschinen wie z.B. Walzwerke, Zerkleinerungsmaschinen, Pressen mit manueller Zufuhr, Kreissägen, Schredder-Maschinen oder Schneidewerkzeugen besteht grundsätzlich ein erhebliches Gefährdungspotential für eine Bedienperson. Aufgrund der erforderlichen Bedienung der Maschine durch die Bedienperson ergibt sich das Erfordernis, die Maschine oder Anlage mit Schutzelementen und/oder Sicherheitsmechanismen auszustatten.

Der Erfindung liegt die Erkenntnis zugrunde, dass bisherige Sicherheitskonzepte für Maschinen entweder einen unzureichenden Schutz für die Bedienperson bieten oder häufig zu unerwünschten unnötigen Fehlabschaltungen führen, da bereits bei harmlosen Abweichungen des zugrunde liegenden Sicherheitskonzepts eine Notabschaltung durchgeführt wird. Ein unzureichender Schutz kann sich beispielsweise dadurch ergeben, dass Hände oder Körperteile der Bedienperson nicht von Maschinenelementen oder zu bearbeitenden Werkstücken unterschieden werden können. Dies ist beispielsweise bei klassischen Lichtgittern oder Lichtvorhängen der Fall.

Derartige Lichtvorhänge werden durch Unterbrechung des Lichtsignals bzw. des reflektierten Lichtsignals ausgelöst. Wenn ein Objekt in einen Ansprechbereich des Lichtvorhangs gelangt, wird die Sicherheitsfunktion ausgelöst. Ein weiteres Prinzip ist die Auslösung durch ein reflektierendes Element (Armband, Handschuh oder reflektierendes Werkstück), das ein Erkennen von ausschließlich reflektierenden Teilen ermöglicht. Nachteilig dabei ist, dass eine Auslösung oder eine Unterbrechung ausschließlich durch das reflektierende Objekt erfolgt. Übliche Lichtvorhänge, die auf Unterbrechung durch ein reflektierendes Element reagieren, können nicht-reflektierende Komponenten nicht erkennen. Eine permanente Eigenüberwachung des Lichtvorhangs ist nicht möglich.

Mittels des klassischen Lichtvorhangs kann zwar ein Eindringen des Objekts detektiert werden, jedoch kann dadurch nicht festgestellt werden, ob dieses Eindringen sicherheitskritisch oder gar erwünscht ist. Häufig wird in solchen Fällen aufgrund hoher Sicherheitsanforderungen im Zweifel eine Notabschaltung der betreffenden Maschine eingeleitet. Erweist sich im Nachhinein die erfolgte Notabschaltung als eine Fehlauslösung, so kann dies zu erheblichen Betriebsstörungen und/oder sogar zu Produktschäden führen. Zwar könnte ein bestimmtes Sicherheitsniveau erreicht werden, jedoch nur mit einem deutlich erhöhten Risiko, unnötige Fehlabschaltungen mit den geschilderten Nachteilen auszulösen. Ein notwendiges Durchgreifen von Werkzeugen oder Komponenten kann nicht ohne Sicherheitsverlust realisiert werden.

Häufig werden Gefahrenstellen bei Maschinen wie z.B. Einzugsstellen soweit wie möglich mithilfe mechanischer Abdeckungen geschützt. In Bereichen, welche nicht abgedeckt sind, werden oft Not-Aus-Schalter wie z.B. Schalter, Bügel, Seilzug-Auslöser beziehungsweise Knieschaltmappen in Griff- beziehungsweise Betätigungsnähe positioniert. Ein zuverlässiger oder gar absoluter Schutz ist jedoch auch mit diesen Elementen bisher nicht gegeben.

Aus der Druckschrift EP 1 870 734 A1 ist ein optoelektronisches Sicherheitslichtgitter mit zwei Sende-Empfangsleisten bekannt. Greift eine Person in das Schutzfeld, wird ein Lichtweg unterbrochen und die Maschine gestoppt. Sendeelemente werden gepulst nacheinander angesteuert. Paare von Sende- und Empfangselementen sind aufeinander abgestimmt.

Des Weiteren beschreibt die Druckschrift EP 0 716 907 A1 eine Schutzeinrichtung für Arbeitsmaschinen mit sich bewegenden Trenn- oder Spaltwerkzeugen. Reflexionsschalter lösen einen Schaltimpuls aus, wenn ein Lichtstrahl des jeweiligen Sendeteils das entsprechende Empfangsteil trifft.

Die Aufgabe der vorliegenden Erfindung kann darin gesehen werden, eine manuelle Bedienung einer Maschine sicherer und effizienter gestalten zu können. Erfindungsgemäß wird diese Aufgabe durch eine Sicherungsvorrichtung für eine Maschine und ein Verfahren zum Betreiben einer Sicherungsvorrichtung für eine Maschine gemäß den unabhängigen Ansprüchen 1 und 10 gelöst. Vorteilhafte Weiterbildungen und alternative Ausführungsformen der Erfindung ergeben sich aus den abhängigen Ansprüchen, der Beschreibung sowie den Figuren.

Die Erfindung sieht eine Sicherungsvorrichtung für eine Maschine vor. Der Begriff "Maschine" kann insbesondere eine industrielle Maschine bedeuten. Die Maschine kann somit als Walzmaschine, Schneidemaschine, Presse, Häckselmaschine, etc. ausgebildet sein. Die Sicherungsvorrichtung wird bevorzugt für Maschinen bereitstellt, von denen bei einem Betrieb für einen Benutzer eine Gefahr ausgehen kann. Die Sicherungsvorrichtung weist eine erste Sende-Empfangseinheit zum Emittieren eines ersten Lichtstrahls in einem ersten Zeitfenster auf. Die erste Sende-Empfangseinheit ist zum Empfangen eines zweiten Lichtstrahls in dem ersten Zeitfenster eingesetzt. Die Sicherungsvorrichtung weist ferner eine zweite Sende-Empfangseinheit auf, welche zum Emittieren des zweiten Lichtstrahls in dem vom ersten verschiedenen zweiten Zeitfenster angeordnet ist. Die zweite Sende-Empfangseinheit ist zum Empfangen des ersten Lichtstrahls im zweiten Zeitfenster eingerichtet. Die zweite Sende-Empfangseinheit kann von der ersten Sende-Empfangseinheit emittierte oder ausgesandte Lichtstrahlen empfangen beziehungsweise erfassen. Die Sende-Empfangseinheiten können Lichtstrahlen sowohl emittieren als auch empfangen. Das Empfangen von Lichtstrahlen kann mit einem Erfassen oder Registrieren der Lichtstrahlen gleichgesetzt werden.

Die Sicherungsvorrichtung weist eine Auswerteeinheit auf. Die Auswerteeinheit ist zum Feststellen eines reflektierenden Objekts zwischen der ersten Sende-Empfangseinheit und der zweiten Sendeempfangseinheit ausgebildet, nur wenn von der ersten Sende-Empfangseinheit in dem ersten Zeitfenster oder der zweite Lichtstrahl von der zweiten Sende-Empfangseinheit in dem zweiten Zeitfenster empfangen wird. Zusätzlich oder alternativ ist die Auswerteeinheit ausgebildet, ein nicht-reflektierendes Objekt festzustellen, nur wenn von keiner der beiden Sende-Empfangseinheiten in beiden Zeitfenstern einer der beiden Lichtstrahlen empfangen wird. Somit ist die Auswerteeinheit insbesondere ausgebildet, das reflektierende Objekt zwischen der ersten und zweiten Sende-Empfangseinheit nur dann festzustellen, wenn der erste Lichtstrahl von der ersten Sende-Empfangseinheit in dem ersten Zeitfenster empfangen wird oder der zweite Lichtstrahl von der zweiten Sende-Empfangseinheit in dem zweiten Zeitfenster empfangen wird. Zusätzlich oder alternativ ist die Auswerteeinheit insbesondere ausgebildet, das nicht-reflektierende Objekt nur dann festzustellen, wenn keine der beiden Sende-Empfangseinheiten in beiden Zeitfenstern einer der beiden Lichtstrahlen empfängt.

Der Lichtstrahl kann als Lichtsignal, Lichtimpuls oder monochromatischer Lichstrahl ausgebildet sein. Der Lichtstrahl kann eine Identifikationsinformation beinhalten. In diesem Fall kann jeder Lichtstrahl der jeweiligen Sende-Empfangseinheit örtlich und/oder zeitlich zugeordnet werden. Bevorzugt kann angegeben werden, von welcher Sende-Empfangseinheit der betreffende Lichtstrahl emittiert wird. Der Lichtstrahl kann als Infrarotlicht ausgebildet sein. In diesem Fall sind beide Lichtstrahlen für ein menschliches Auge nicht sichtbar. Damit kann eine nicht sichtbare Sicherungsvorrichtung für die Maschine bereitgestellt werden. Beispielsweise kann eine Wellenlänge der Lichtstrahlen 0,7 Mikrometer bis 1000 Mikrometer betragen. Das erste Zeitfenster und das zweite Zeitfenster können jeweils als Zeitspannen betrachtet werden. Die Zeitfenster können jeweils mit zwei Zeitpunkten definiert werden. So können ein Anfangszeitpunkt sowie ein Endzeitpunkt das erste oder zweite Zeitfenster definieren. Diese Definition der Zeitfenster kann auf alle weiteren folgenden Zeitfenster entsprechend übertragen werden. Bevorzugt wiederholt sich eine Abfolge aus erstem und zweitem Zeitfenster periodisch. Diese periodische Wiederholung kann einer Taktfrequenz folgen beziehungsweise die periodische Wiederholung kann von der Taktfrequenz abhängig sein oder sich an der Taktfrequenz orientieren.

Die Sende-Empfangseinheit kann eine vorgelagerte Optik aufweisen. Diese vorgelagerte Optik kann beispielsweise dazu eingerichtet sein, das Emittieren und/oder Empfangen der Lichtstrahlen zu ermöglichen oder effizienter auszugestalten. Im Falle mehrerer erster Sende-Empfangseinheiten und mehrerer zweiter Sende-Empfangseinheiten können mehrere erste Lichtstrahlen beziehungsweise mehrere zweite Lichtstrahlen emittiert und empfangen werden. Diese mehreren Lichtstrahlen können ein Lichtgitter aufspannen oder einen Lichtvorhang bilden. Dringt ein Objekt in dieses Lichtgitter beziehungsweise in den Lichtvorhang ein, so wird wenigstens ein Lichtstrahl hinsichtlich seiner Ausbreitung beeinflusst. Dringt beispielsweise ein reflektierendes Objekt zwischen der ersten Sende-Empfangseinheit und der zweiten Sende-Empfangseinheit ein, so werden beide Lichtstrahlen entsprechend zurückreflektiert. In dieser Situation würde der erste Lichtstrahl von der ersten Sende-Empfangseinheit im ersten Zeitfenster empfangen werden. Zugleich würde der zweite Lichtstrahl von der zweiten Sende-Empfangseinheit in dem zweiten Zeitfenster empfangen werden. Vorzugsweise ist das erste Zeitfenster zeitlich versetzt zum zweiten Zeitfenster. Die Begriffe Lichtgitter und Lichtvorhang können als Synonyme betrachtet werden. Ebenso können die Begriffe Zeitabstand und Zeitversatz als Synonyme betrachtet werden.

Eine zeitliche Ausdehnung der Zeitfenster orientiert sich vorzugsweise anhand einer Laufzeit der Lichtstrahlen von der ersten Sende-Empfangseinheit zur zweiten Sende-Empfangseinheit. Bei einem beispielhaft angenommenen Abstand von einem Meter zwischen der ersten und zweiten Sende-Empfangseinheit ergibt sich mittels der bekannten Lichtgeschwindigkeit eine Laufzeit der Lichtstrahlen von etwa 3 Nanosekunden (3 ns). Demzufolge kann es sinnvoll sein, dass die Zeitfenster eine zeitliche Ausdehnung im Bereich von Nanosekunden aufweisen. Der konkrete Wert betreffend die zeitliche Ausdehnung der Zeitfenster kann individuell für die zu sichernde Maschine adaptiert werden. Das zweite Zeitfenster weist bevorzugt einen vorgegebenen Zeitversatz zum ersten Zeitfenster auf. Dieser vorgegebene Zeitversatz kann beispielsweise im Bereich von wenigen Millisekunden liegen. Er kann beispielsweise drei bis 5 Millisekunden (5 ms) betragen. Bevorzugt ist der Wert des Zeitversatzes deutlich größer ausgebildet als der Wert betreffend die zeitliche Ausdehnung der Zeitfenster. Damit kann eine nicht sichtbare Sicherungsvorrichtung für eine Maschine bereitgestellt werden, welche zugleich eine Klassifizierung des erfassten Objekts durchführen kann. So kann die Sicherungsvorrichtung unterscheiden, ob das erfasste Objekt reflektierend oder nicht-reflektierend ausgebildet ist.

Diesen unterschiedlichen Objekten können jeweils unterschiedliche Sicherheitsmaßnahmen zugeordnet sein. So kann beispielsweise vorgesehen sein, dass im Falle eines reflektierenden Objekts die Auswerteeinheit ausgebildet ist, ein erstes Steuersignal zum sofortigen Abschalten der Maschine zu erzeugen. Im Falle des nicht-reflektierenden Objekts kann die Auswerteeinheit ausgebildet sein, zunächst keine weiteren Maßnahmen vorzusehen oder ein zweites Steuersignal zum angepassten Betreiben der Maschine zu erzeugen.

Ein Benutzer ist häufig dazu angehalten, ein Reflexionsarmband zu benutzen, während er die Maschine betreibt. In manchen Fällen kann vorgesehen sein, dass bereits zum Aktivieren der Maschine ein Tragen von Reflexionsarmbändern erforderlich ist. Detektiert die Auswerteeinheit das nicht-reflektierende Objekt, so könnte dieses Objekt ein Roboterarm sein, der berechtigt ist, das Lichtgitter zu passieren. In diesem Fall ist es meist gerade nicht erwünscht, dass eine Notabschaltung der Maschine eingeleitet wird. Hier kann die Sicherungsvorrichtung erkennen, ob das die Lichtstrahlen beeinflussende Objekt reflektierend oder nicht-reflektierend ist. Im Falle des Feststellens des reflektierenden Objekts kann eine Notabschaltung als Folge vorgesehen sein. Vorzugsweise ist die Auswerteeinheit dazu ausgebildet, lediglich bei einem Feststellen eines reflektierenden Objekts oder einem nicht-reflektierenden Objekt eine Notabschaltung einzuleiten. Somit ist vorzugsweise vorgesehen, dass die Auswerteeinheit bei einem Feststellen des reflektierenden Objekts ein unterschiedliches Steuersignal für die Maschine erzeugt als im Falle des Feststellens des nicht-reflektierenden Objekts. Auf diese Weise kann ein Gefahrenbereich bei einer Maschine zuverlässig abgesichert werden und zugleich kann ein Risiko einer ungewollten oder unnötigen Fehlabschaltung reduziert werden.

Eine zusätzliche oder alternative Ausführungsform sieht eine Sicherungsvorrichtung vor, wobei die Steuereinheit ausgebildet ist, eine Funktionsfähigkeit der Sicherungsvorrichtung festzustellen, nur wenn der erste Lichtstrahl von der zweiten Sende-Empfangseinheit in dem ersten Zeitfenster empfangen wird und/oder der zweite Lichtstrahl von der ersten Sende-Empfangseinheit in dem zweiten Zeitfenster empfangen wird. Das Feststellen der Funktionsfähigkeit der Sicherungsvorrichtung kann als Funktionskontrolle bezeichnet werden. Dabei wird insbesondere eine Funktionsfähigkeit der Sicherungsvorrichtung geprüft.

Befindet sich kein Objekt zwischen der ersten und zweiten Sende-Empfangseinheit, so können sich die Lichtstrahlen jeweils ungehindert dazwischen ausbreiten. In dieser Situation gelangt der jeweilige Lichtstrahl in demselben Zeitfenster von der emittierenden Sende- Empfangseinheit zur empfangenden Sende-Empfangseinheit. Aufgrund der Lichtgeschwindigkeit von etwa 3 × 10^8 m/s gelangt in dieser Situation der jeweilige Lichtstrahl nach dem Emittieren unverzüglich beziehungsweise "sofort" zur gegenüberliegenden Sende-Empfangseinheit. Die Auswerteeinheit kann ausgebildet sein, in regelmäßigen Abständen die Funktionskontrolle durchzuführen. Das Feststellen der Funktionsfähigkeit der Sicherungsvorrichtung kann zusätzlich oder alternativ kontinuierlich oder permanent erfolgen. Mithilfe des Feststellens der Funktionsfähigkeit beziehungsweise der Funktionskontrolle kann ein Defekt der Sicherungsvorrichtung für die Maschine frühzeitig erkannt werden.

Ist beispielsweise zwischen der ersten und zweiten Sende-Empfangseinheit kein Objekt angeordnet oder befindlich, so kann auf eine Fehlfunktion der Sicherungsvorrichtung für die Maschine geschlossen werden, falls die Auswerteeinheit dennoch ein reflektierendes Objekt oder ein nicht-reflektierendes Objekt feststellt. Kann die Auswerteeinheit beispielsweise an der zweiten Sende-Empfangseinheit kein Empfangen von Lichtstrahlen feststellen, so kann dies auf einen Defekt der zweiten Sende-Empfangseinheit hindeuten. In diesem Fall kann der erste Lichtstrahl von der zweiten Sende-Empfangseinheit nicht empfangen werden. Wenn zwischen der ersten und zweiten Sende-Empfangseinheit das Empfangen von Lichtstrahlen durch ein nicht-reflektierendes Objekt unterbrochen ist und die Unterbrechung nicht positionsähnlich (insbesondere gegenüberliegend) ist, kann dies ebenfalls auf einen Defekt einer Sende-Empfangseinheit hindeuten.

Eine zusätzliche oder alternative Ausführungsform sieht vor, dass die Auswerteeinheit ausgestaltet ist, basierend auf dem Feststellen des reflektierenden oder nicht-reflektierenden Objekts ein vorgegebenes Steuersignal für die Maschine zu erzeugen.

Bevorzugt erschöpft sich die Auswerteeinheit nicht darin, lediglich festzustellen, ob ein erfasstes Objekt reflektierend oder nicht-reflektierend ausgebildet ist. Da Maschinen häufig von Bedienpersonen mit Reflexionsarmbändern betrieben werden, kann die Auswerteeinheit bevorzugt ausgestaltet sein, im Falle des Feststellens des reflektierenden Objekts ein erstes Steuersignal zum Abschalten oder Deaktivieren der Maschine zu erzeugen. Idealerweise wird das erste Steuersignal unmittelbar nach dem Feststellen des reflektierenden Objekts erzeugt. Dieses erste Steuersignal ist ferner bevorzugt ausgestaltet, eine Abschaltung der Maschine beziehungsweise eine sofortige Notabschaltung der Maschine zu veranlassen. Trägt der Benutzer beispielsweise um sein Handgelenkt ein Reflexionsarmband und stellt die Auswerteeinheit das reflektierende Objekt fest, so bedeutet dies mit sehr hoher Wahrscheinlichkeit, dass die Hand des Benutzers sich einem Gefahrenbereich der Maschine nähert. Eine solche Situation ist als äußerst gefährlich einzustufen. Aus diesem Grund ist die Auswerteeinheit bevorzugt ausgestaltet, im Falle des Feststellens oder Erkennens des reflektierenden Objekts eine unmittelbare und sofortige Abschaltung der Maschine zu veranlassen beziehungsweise durchzuführen. Dadurch kann eine Verletzung der Hand der Bedienperson sicher vermieden werden.

Würde jedoch anstelle des Reflexionsarmbands ein nicht-reflektierender Roboterarm den durch die Lichtstrahlen gebildeten Lichtvorhang passieren, so ist die Auswerteeinheit bevorzugt ausgestaltet, zunächst keine Notabschaltung der Maschine zu veranlassen. Das Feststellen des nicht-reflektierenden Objekts kann sogar einen erwünschten Arbeitsablauf darstellen. Die Auswerteeinheit kann ein zweites vom ersten verschiedenen Steuersignal für die Maschine erzeugen. Somit kann die Sicherungsvorrichtung zwischen erwünschten Arbeitsabläufen und für die Bedienpersonen gefährlichen Situationen unterscheiden. Es ist jedoch auch möglich, dem nicht-reflektierenden Objekt die Notabschaltung oder das erste Steuersignal zuzuordnen. Dies wäre beispielsweise dann sinnvoll, wenn der Roboterarm eine reflektierende Oberfläche aufweist.

Eine zusätzliche oder alternative Ausführungsform sieht eine Sicherungsvorrichtung vor, wobei das erste Zeitfenster vom zweiten Zeitfenster zeitlich durch einen vorgegebenen Zeitabstand getrennt ist. Dieser vorgegebene Zeitabstand übersteigt insbesondere eine Laufzeit des ersten Lichtstrahls von der ersten zur zweiten Sende-Empfangseinheit. Die Laufzeit kann analog mithilfe des zweiten Lichtstrahls definiert werden. Der vorgegebene Zeitabstand beträgt vorzugsweise wenige Millisekunden. Er kann beispielsweise 2, 3, 4, 5, 6, 7, 8, 9 oder 10 Millisekunden betragen. Die Laufzeit der Lichtstrahlen oder des ersten Lichtstrahls beträgt vorzugsweise lediglich wenige Nanosekunden, oft weniger als 10 ns. Die Laufzeit der Lichtstrahlen orientiert sich vorzugsweise an jener Zeitspanne, welche die Lichtstrahlen benötigen, um von der ersten zur zweiten Sende-Empfangseinheit zu gelangen. Aufgrund der Lichtgeschwindigkeit ist diese Laufzeit deutlich kleiner als eine Millisekunde. Bevorzugt entspricht die zeitliche Ausdehnung der Zeitfenster der Laufzeit des ersten Lichtstrahls der ersten zur zweiten Sende-Empfangseinheit. Die zeitliche Ausdehnung der Zeitfenster kann ein Vielfaches der Laufzeit betragen. So kann beispielsweise das erste Zeitfenster beziehungsweise das zweite Zeitfenster doppelt so groß sein wie die Laufzeit. Dadurch kann gewährleistet werden, dass das erste Zeitfenster zeitlich deutlich von dem zweiten Zeitfenster getrennt ist. So kann zuverlässig durch die Auswerteeinheit festgestellt werden, ob der erste oder zweite Lichtstrahl im ersten oder zweiten Zeitfenster empfangen wird. Bei einem vorgegebenen Zeitabstand von etwa drei Millisekunden kann immer noch zuverlässig das nicht-reflektierende Objekt festgestellt werden. Bei dem vorgegebenen Zeitabstand von drei Millisekunden ist es nahezu ausgeschlossen, dass ein Objekt ein durch die Lichtstrahlen gebildeten Lichtvorhang unbemerkt passiert beziehungsweise nicht festgestellt wird.

Eine zusätzliche oder alternative Ausführungsform sieht eine Sicherungsvorrichtung mit mehreren ersten Sende-Empfangseinheiten und mehreren zweiten Sende-Empfangseinheiten vor. Dabei ist zu jeder ersten Sende-Empfangseinheit eine zweite Sende-Empfangseinheit zum Empfangen des ersten Lichtstrahls zugeordnet. Bevorzugt weist die Sicherungsvorrichtung genauso viele erste Sende-Empfangseinheiten wie zweite Sende-Empfangseinheiten auf. Jeder ersten Sende-Empfangseinheit kann genau eine der mehreren zweiten Sende-Empfangseinheiten zugeordnet sein. Je eine der ersten Sende-Empfangseinheiten sowie die dazugehörige zweite Sende-Empfangseinheit kann als ein Sensorpaar bezeichnet werden. Die Auswerteeinheit ist bevorzugt dazu ausgebildet, bezüglich jedes Sensorpaars das reflektierende oder nicht-reflektierende Objekt festzustellen. Damit können die durch die Auswerteeinheit erfassten Informationen örtlich aufgelöst werden.

Die mehreren ersten Sende-Empfangseinheiten sowie die mehreren zweiten Sende-Empfangseinheiten können in unterschiedliche Gruppen unterteilt sein. Die Auswerteinheit kann insbesondere dazu ausgebildet sein, in Abhängigkeit von der Gruppe von mehreren Sende-Empfangseinheiten ein Steuersignal für die Maschine zu erzeugen. So kann beispielsweise bei einem Feststellen eines Objekts mithilfe einer ersten Gruppe von mehreren Sende-Empfangseinheiten das erste Steuersignal erzeugt werden, während die Auswerteeinheit bei einem Feststellen eines Objekts mittels einer zweiten Gruppe von mehreren Sende-Empfangseinheiten das zweite Steuersignal erzeugt. Das zweite Steuersignal kann beispielsweise ausgebildet sein, einen Alarm auszulösen, jedoch noch nicht eine Abschaltung der Maschine. Das erste Steuersignal kann ausgebildet sein, eine sofortige Abschaltung der Maschine zu veranlassen. Somit können mithilfe der mehreren ersten und zweiten Sende-Empfangseinheiten verschiedene Schutzzonen um einen vorgegebenen Bereich der Maschine definiert oder gebildet werden. Zudem kann mit mehreren ersten und zweiten Sende-Empfangseinheiten der vorgegebene Bereich an der Maschine zuverlässig und vollständig überwacht werden. Zudem kann mithilfe der mehreren ersten und zweiten Sende-Empfangseinheiten eine entsprechende Ortsauflösung des detektierten Objekts erfolgen. So kann die Sicherungsvorrichtung präziser an eine jeweilige Maschine angepasst werden.

Eine zusätzliche oder alternative Ausführungsform sieht vor, dass die mehreren ersten Sende-Empfangseinheiten entlang einer ersten Linie angeordnet sind. Die mehreren zweiten Sende-Empfangseinheiten sind entlang einer zweiten Linie angeordnet. Dabei ist die erste Linie zur zweiten Linie kongruent ausgebildet. In anderen Worten bilden die mehreren ersten Sende-Empfangseinheiten eine erste Anordnung der mehreren ersten Sende-Empfangseinheiten. Diese Anordnung entspricht insbesondere den jeweiligen Positionen der mehreren ersten Sende-Empfangseinheiten. Analog dazu kann mithilfe der mehreren zweiten Sende-Empfangseinheiten eine entsprechende zweite Anordnung definiert werden. Dabei ist die erste Anordnung bevorzugt kongruent zur zweiten Anordnung ausgebildet. Dies bedeutet insbesondere, dass die erste Anordnung mithilfe einer Kongruenzabbildung in die zweite Anordnung überführt werden kann. Eine Kongruenzabbildung ist beispielsweise eine Parallelverschiebung, Drehung, Spiegelung und/oder Punktspiegelung. Die mehreren ersten und zweiten Sende-Empfangseinheiten können insbesondere einander abwechselnd mehrere Lichtstrahlen emittieren beziehungsweise empfangen.

Die mehreren ersten Sende-Empfangseinheiten können beispielsweise entlang einer Leiterplatte angeordnet sein. Entsprechendes kann für die mehreren zweiten Sende-Empfangseinheiten gelten. Aufgrund der Kongruenz der ersten Linie zur zweiten Linie kann ausgehend von der ersten Sende-Empfangseinheit einfach eine Position der zweiten Sende-Empfangseinheit ermittelt werden. Dies kann dabei helfen, das Feststellen eines Objekts zuverlässiger und schneller durchführen zu können.

Eine zusätzliche oder alternative Ausführungsform sieht vor, dass die mehreren ersten Sende-Empfangseinheiten und die mehreren Sende-Empfangseinheiten jeweils geradlinig, halbkreisförmig, kreisförmig, U-förmig und/oder rechteckig angeordnet sind. Mithilfe einer rechteckigen Anordnung der mehreren ersten und zweiten Sende-Empfangseinheiten kann ein quaderförmiges Lichtgitter beziehungsweise ein quaderförmiger Lichtvorhang um einen vorgegebenen Gefahrenbereich einer Maschine gebildet werden. Bei einer Walzmaschine mit zylinderförmigen Walzen kann entsprechend eine U-förmige oder halbkreisförmige Anordnung der mehreren Sende-Empfangseinheiten sinnvoll sein. Die zuvor genannten Vorteile und Beispiele gelten sinngemäß und analog für diese Ausführungsform.

Eine zusätzliche oder alternative Ausführungsform sieht eine Sicherungsvorrichtung mit einer Maschine, insbesondere mit einer Walzmaschine vor. Die Auswerteeinheit ist ausgestaltet, im Falle des Feststellens des reflektierenden Objekts die Maschine abzuschalten. Alternativ dazu kann die Auswerteeinheit ausgebildet sein, im Falle des Feststellens des nicht-reflektierenden Objekts die Maschine abzuschalten.

Die Auswerteeinheit kann somit in verschiedenen Arbeitsmodi betrieben werden. Sie kann in einem ersten Arbeitsmodus dazu ausgebildet sein, nur bei einem Feststellen des reflektierenden Objekts die Maschine abzuschalten. In einem zweiten Arbeitsmodus kann die Auswerteieinheit ausgebildet sein, die Maschine nur im Falle des Feststellens des nicht-reflektierenden Objekts abzuschalten. In Verbindung mit den voranstehenden Ausführungsformen, Beispielen und Vorteilen kann die Maschine mithilfe der Sicherungsvorrichtung von einem Benutzer sicher manuell bedient werden.

Zugleich kann eine unbeabsichtigte und erwünschte Fehlabschaltung der Maschine vermieden werden. Die genannten Beispiele und Vorteile gelten sinngemäß und analog ebenfalls für diese Ausführungsform.

Eine zusätzliche oder alternative Ausführungsform sieht vor, dass die mehreren ersten und zweiten Sende-Empfangseinheiten derart angeordnet sind, dass ein vorgegebener Bereich der Maschine nur mittels des Feststellens des reflektierenden Objekts und/oder des Feststellens des nicht nicht-reflektierenden Objekts zugänglich ist. Bevorzugt sind die mehreren ersten und zweiten Sende-Empfangseinheiten so angeordnet, dass der vorgegebene Bereich der Maschine nur unter Feststellen des reflektierenden Objekts und/oder unter Feststellen des nicht-reflektierenden Objekts zugänglich oder erreichbar ist. Ein Benutzer kann demnach sich nicht von der Auswerteeinheit unbemerkt dem vorgegebenen Bereich nähern. Der vorgegebene Bereich der Maschine ist insbesondere ein Gefahrenbereich. Bei einem laufenden Betrieb der Maschine soll sich der Benutzer oder ein Körperteil des Benutzers nicht dem Gefahrenbereich nähern beziehungsweise in ihn eindringen. Daher werden die mehreren ersten Sende-Empfangseinheiten bei dieser Ausführungsform bevorzugt entsprechend in einer Umgebung des vorgegebenen Bereichs angeordnet. Es ist auch möglich, dass lediglich für den Benutzer mögliche Zugänge mithilfe der mehreren ersten und zweiten Sende-Empfangseinheiten abgesichert sind. Durch die entsprechende Anordnung der mehreren ersten und zweiten Sende-Empfangseinheiten kann jeweils ein entsprechender Lichtvorhang oder ein Lichtgitter erzeugt werden. Dieses Lichtgitter oder mehrere Lichtgitter werden sinnvollerweise so angeordnet, dass ein Zugang für einen Benutzer nur mittels des Feststellens des reflektierenden und/oder nicht-reflektierenden Objekts möglich ist. Somit kann gewährleistet werden, dass der Benutzer in keinem Fall von der Auswerteeinheit unbemerkt sich dem vorgegebenen Bereich nähern kann oder in diesen Bereich von der Auswerteeinheit unbemerkt eindringen kann. Die bereits zuvor genannten Vorteile und Beispiele gelten sinngemäß und analog für diese Ausführungsform.

Die Erfindung sieht ebenfalls ein Verfahren zum Betreiben einer Sicherungsvorrichtung für eine Maschine vor. Dieses Verfahren beinhaltet folgende Verfahrensschritte. Zunächst wird ein erster Lichtstrahl in einem ersten Zeitfenster mittels einer ersten Sende-Empfangseinheit emittiert. Ein zweiter Lichtstrahl wird in einem vom ersten verschiedenen zweiten Zeitfenster mittels einer zweiten Sende-Empfangseinheit emittiert. Die Sende-Empfangseinheiten sind ausgestaltet, die beiden Lichtstrahlen zu empfangen, erfassen oder zu registrieren.

Es erfolgt ein Feststellen eines reflektierenden Objekts zwischen der ersten Sende-Empfangseinheit und der zweiten Sende-Empfangseinheit nur, wenn, der erste Lichtstrahl von der ersten Sende-Empfangseinheit in dem ersten Zeitfenster oder der zweite Lichtstrahl von der zweiten Sende-Empfangseinheit in dem zweiten Zeitfenster empfangen wird. Zusätzlich oder alternativ wird ein nicht-reflektierendes Objekt zwischen der ersten Sende-Empfangseinheit und der zweiten Sende-Empfangseinheit festgestellt, nur wenn von keiner der beiden Sende-Empfangseinheiten in beiden Zeitfenstern einer der beiden Lichtstrahlen empfangen wird. Die Merkmale, Vorteile und Beispiele zu den bereits geschilderten Ausführungsformen gelten sinngemäß und analog für das Verfahren.

Somit können entsprechende Vorteile, Beispiele und Merkmale der Ausführungsformen sinngemäß und analog auf das Verfahren übertragen werden. Ebenso können Verfahrensmerkmale als entsprechende Vorrichtungsmerkmale interpretiert werden. Somit können Merkmale, Vorteile und Beispiele des Verfahrens sinngemäß und analog auf die Ausführungsformen übertragen werden.

Eine zusätzliche oder alternative Weiterbildung des Verfahrens sieht vor, dass das Emittieren des ersten Lichtstrahls zeitlich versetzt zum Emittieren des zweiten Lichtstrahls mit einem vorgegebenen Zeitversatz erfolgt. Aufgrund des zeitlich versetzten Emittierens der Lichtstrahlen ergibt sich ein Empfangen der jeweiligen Lichtstrahlen im ersten beziehungsweise zweiten Zeitfenster. Dabei ist der Zeitversatz idealerweise so gewählt, dass ein unbemerktes Eindringen in einen Gefahrenbereich der Maschine nicht möglich ist. Die in den Ausführungsformen genannten Vorteile und Beispiele gelten sinngemäß und analog für dieses Verfahren.

Eine zusätzliche oder alternative Weiterbildung des Verfahrens sieht vor, dass der erste Lichtstrahl und der zweite Lichtstrahl einander abwechselnd periodisch wiederholend emittiert werden. Das Verfahren beschränkt sich bevorzugt nicht darauf, den ersten und zweiten Lichtstrahl jeweils einmalig zu emittieren. Bevorzugt werden der erste und zweite Lichtstrahl regelmäßig wiederholend emittiert. Der erste Lichtstrahl kann mit einer ersten Taktfrequenz emittiert werden. Der zweite Lichtstrahl kann mit einer zweiten Taktfrequenz emittiert werden. Diese beiden Taktfrequenzen können gleich sein. Das Emittieren der jeweiligen Lichtstrahlen erfolgt dabei idealerweise einer vorgegebenen Taktfrequenz. Diese Taktfrequenz orientiert sich bevorzugt an dem vorgegebenen Zeitversatz zwischen dem ersten und zweiten Zeitfenster.

Eine zusätzliche oder alternative Weiterbildung des Verfahrens sieht vor, dass eine Funktionsfähigkeit der Sicherungsvorrichtung festgestellt wird, nur wenn der erste Lichtstrahl in dem ersten Zeitfenster von der zweiten Sende-Empfangseinheit empfangen wird und der zweite Lichtstrahl von der ersten Sende-Empfangseinheit in dem zweiten Zeitfenster empfangen wird. Die genannten Vorteile und Beispiele der Ausführungsformen gelten sinngemäß und analog für dieses Verfahren.

Eine zusätzliche oder alternative Weiterbildung des Verfahrens sieht vor, dass ein Fehlersignal erzeugt wird, wenn während einer vorgegebenen Zeitspanne keiner der beiden Lichtstrahlen von der ersten Sende-Empfangseinheit und/oder der zweiten Sende-Empfangseinheit empfangen wird. In diesem Fall empfängt wenigstens einer der beiden Sende-Empfangseinheit keinen Lichtstrahl. Dies bedeutet, dass eine der beiden Sende-Empfangseinheiten für die vorgegebene Zeitspanne kein Lichtsignal beziehungsweise keinen Lichtstrahl detektiert. Diese Situation kann auf einen Defekt der Sicherungsvorrichtung hindeuten. Aus diesem Grund sieht die Weiterbildung dieses Verfahrens vor, dass ein Fehlersignal erzeugt wird. Dadurch kann ein Defekt an der Sicherungsvorrichtung rechtzeitig erkannt beziehungsweise behoben werden. Es kann zusätzlich vorgesehen sein, dass ein Betrieb oder ein Einschalten der Maschine nach dem Erzeugen des Fehlersignals nicht mehr möglich ist. Dadurch kann vermieden werden, dass die Maschine ohne die Sicherungsvorrichtung betrieben wird beziehungsweise in Gang gesetzt wird. So kann ein hohes Sicherheitsniveau bezüglich des Betreibens der Maschine erreicht werden.

Die im Zusammenhang mit der erfindungsgemäßen Sicherungsvorrichtung bzw. der entsprechenden Maschine genannten Vorteile und Ausführungsformen können analog auch bei dem erfindungsgemäßen Verfahren realisiert werden. Dies bedeutet, dass die Merkmale der Sicherungsvorrichtung als entsprechende funktionelle Merkmale des erfindungsgemäßen Verfahrens implementiert werden können.

Die Erfindung wird nun anhand der beigefügten Figuren näher erläutert. Diese Figuren stellen beispielhafte Ausführungen beziehungsweise Möglichkeiten der Realisierung der Erfindung dar. Die in den Figuren angegebenen Merkmale und Beispiele schränken jedoch den Wesensgehalt der Erfindung nicht ein.

Dabei zeigt:
- Fig. 1: eine schematische Illustration zum Feststellen eines reflektierenden Objekts zwischen einer ersten und zweiten Sende-Empfangseinheit;
- Fig. 2: eine schematische Illustration zum Feststellen eines nicht-reflektierenden Objekts zwischen der ersten und zweiten Sende-Empfangseinheit;
- Fig. 3: eine schematische Illustration zum Feststellen einer Funktionsfähigkeit der Sicherungsvorrichtung;
- Fig.4: eine schematische Darstellung eines Lichtgitters, das mit mehreren ersten und zweiten Sende-Empfangseinheiten realisiert ist;
- Fig. 5: eine schematische Darstellung der Sicherungsvorrichtung mit einer Maschine; wobei ein vorgegebener Bereich der Maschine mit einem halbkreisförmigen Lichtgitter gesichert ist;
- Fig. 6: eine schematische Darstellung der Sicherungsvorrichtung mit einer Maschine, dessen vorgegebener Bereich mittels eines U-förmigen Lichtgitters gesichert ist;
- Fig. 7: eine Sicherungsvorrichtung, bei der die ersten und zweiten Sende-Empfangseinheiten jeweils halbkreisförmig angeordnet sind.

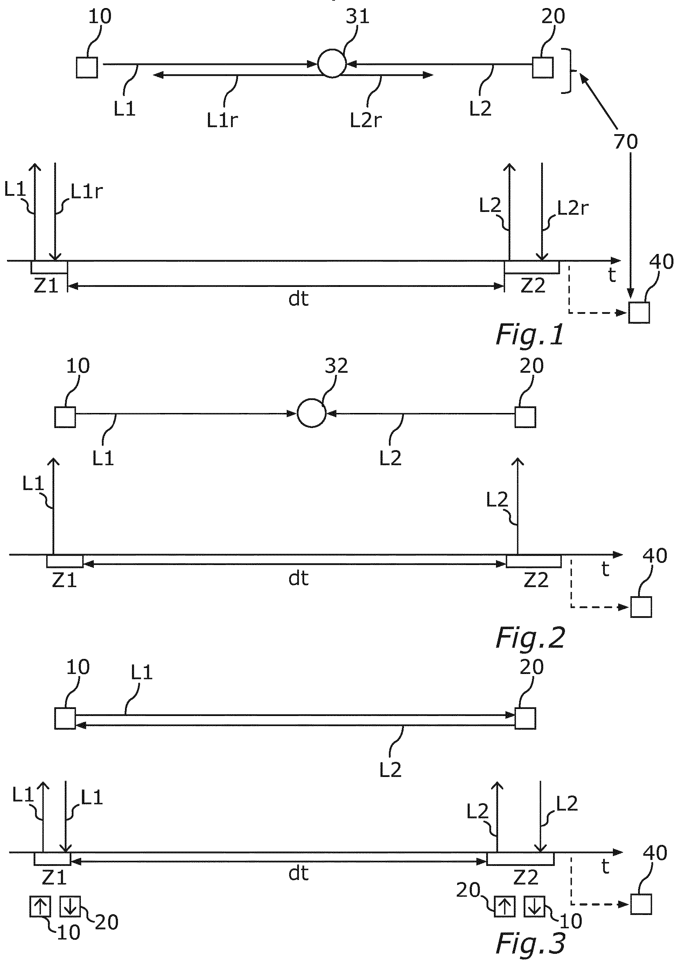

Die Figuren 1 bis 3 zeigen schematisch die Funktionsweise einer Sicherungsvorrichtung 70. Fig. 1 zeigt jene Situation, welche dem Feststellen eines reflektierenden Objekts 31 zwischen einer ersten Sende-Empfangseinheit 10 und einer zweiten Sende-Empfangseinheit 20 entspricht. Die erste Sende-Empfangseinheit 10 sendet einen ersten Lichtstrahl L1 in Richtung der zweiten Sende-Empfangseinheit 20 aus. Ebenso sendet die zweite Sende-Empfangseinheit 20 zeitversetzt einen zweiten Lichtstrahl L2 in Richtung der ersten Sende-Empfangseinheit 10 aus. Aufgrund des reflektierenden Objekts 31 können diese beiden Lichtstrahlen L1 und L2 die jeweils andere Sende-Empfangseinheit nicht erreichen. Aufgrund der Reflexionseigenschaft des reflektierenden Objekts 31 kommt es zu einem reflektierten Lichtstrahl L1r sowie einem zweiten reflektierten Lichtstrahl L2r. Diese reflektierten Lichtstrahlen L1r und L2r werden durch die Sende-Empfangseinheiten 10, 20 empfangen.

Eine in den Figuren 1 bis 3 gezeigte Zeitachse t zeigt schematisch ein erstes Zeitfenster Z1 sowie ein zweites Zeitfenster Z2. Diese beiden Zeitfenster Z1, Z2 sind zeitlich durch einen vorgegebenen Zeitversatz dt voneinander getrennt. Der Zeitversatz kann ebenso als Zeitabstand betrachtet werden.

Im Fall der Fig. 1 emittiert die erste Sende-Empfangseinheit 10 im ersten Zeitfenster Z1 den ersten Lichtstrahl L1. Zwischen der ersten Sende-Empfangseinheit 10 und der zweiten Sende-Empfangseinheit 20 ist das reflektierende Objekt 31 angeordnet. Aufgrund der Reflexion am reflektierenden Objekt 31 empfängt die erste Sende-Empfangseinheit 10 den ersten reflektierten Lichtstrahl L1r ebenfalls in dem ersten Zeitfenster Z1. Entsprechend empfängt die zweite Sende-Empfangseinheit 20 den zweiten reflektierten Lichtstrahl L2r im zweiten Zeitfenster Z2.

Der vorgegebene Zeitversatz oder Zeitabstand dt ist in der Regel deutlich größer ausgebildet als eine Zeitdauer des ersten oder zweiten Zeitfensters. Es ist zu beachten, dass die dargestellten Zeitskalen t lediglich schematisch sind. Das erste Zeitfenster Z1 beziehungsweise das zweite Zeitfenster Z2 haben jeweils eine zeitliche Ausdehnung von wenigen Nanosekunden. Im Gegensatz dazu beträgt der vorgegebene Zeitversatz dt in der Regel wenige Millisekunden. Zur besseren Darstellung des Funktionsprinzips werden die Zeitskalen t daher nicht maßstabsgetreu wiedergegeben. Eine Auswerteeinheit 40 kann ermitteln, welche der beiden Sende-Empfangseinheiten in welchem Zeitfenster Lichtstrahlen empfängt. Die Auswerteeinheit 40 kann die mit den Zeitskalen t dargestellten Informationen erfassen.

Fig. 2 zeigt schematisch das Funktionsprinzip der Sicherungsvorrichtung 70 bei einem Feststellen eines nicht-reflektierenden Objekts 32. Ist zwischen den beiden Sende-Empfangseinheiten 10, 20 das nicht-reflektierende Objekt 32 angeordnet, so kann die zweite Sende-Empfangseinheit 20 den ersten Lichtstrahl L1 nicht empfangen. Der erste Lichtstrahl L1 erreicht in diesem Fall die zweite Sende-Empfangseinheit 20 nicht. Entsprechendes gilt für den zweiten Lichtstrahl L2. Hinsichtlich der Zeitskala t ergibt sich dabei die in Fig. 2 dargestellte Situation.

Die erste Sende-Empfangseinheit 10 sendet in dem ersten Zeitfenster Z1 den ersten Lichtstrahl L1 aus. In dem zweiten Zeitfenster Z2 emittiert die zweite Sende-Empfangseinheit 20 den zweiten Lichtstrahl L2 in Richtung der ersten Sende-Empfangseinheit 10. Aufgrund des nicht-reflektierenden Objekts 32 werden diese beiden Lichtstrahlen in ihrer Ausbreitung gehindert. Die Lichtstrahlen L1 und L2 können beispielsweise absorbiert werden. Die Auswerteeinheit 40 kann demnach kein empfangenes Lichtsignal detektieren. Weder die erste noch die zweite Sende-Empfangseinheit empfangen einen Lichtstrahl, Lichtimpuls oder Lichtsignale von der ersten oder zweiten Sende-Empfangseinheit.

Bevorzugt weisen die Lichtstrahlen L1 und L2 eine Wellenlänge im Infrarotbereich auf. Die Wellenlänge des ersten Lichtstrahls L1 und des zweiten Lichtstrahls L2 werden dabei so gewählt, dass die Sende-Empfangseinheiten 10, 20 nicht Umgebungslicht als den ersten Lichtstrahl L1 oder zweiten Lichtstrahl L2 interpretieren. Das Emittieren der beiden Lichtstrahlen beziehungsweise das Empfangen der Lichtstrahlen an den jeweiligen Sende-Empfangseinheiten 10, 20 kann von der Auswerteeinheit 40 erfasst beziehungsweise registriert werden. Insbesondere kann die Auswerteeinheit 40 die jeweiligen Zeitpunkte des Emittierens oder Empfangens der jeweiligen Lichtstrahlen L1, L2 erfassen. Die Auswerteeinheit 40 kann anhand eines Anfangszeitpunkts und eines Endzeitpunkts jeweils das erste oder zweite Zeitfenster definieren. Im Fall der Fig. 1 registriert die Auswerteeinheit 40 das reflektierende Objekt 31 zwischen der ersten und zweiten Sende-Empfangseinheit. Registriert die Auswerteeinheit 40 hingegen keine empfangenen Lichtstrahlen, so kann dies auf das nicht-reflektierende Objekt 32 hindeuten. Die in Fig. 2 gezeigte Situation könnte jedoch in seltenen Fällen ebenfalls auf einen teilweisen Defekt der Sicherungsvorrichtung 70 zurückzuführen sein.

Deshalb schlägt die Erfindung bevorzugt vor, eine Funktionskontrolle oder das Prüfen einer Funktionsfähigkeit der Sicherungsvorrichtung 70 durchzuführen. Die Fig. 3 zeigt schematisch das Prinzip dieser Funktionskontrolle. Die Funktionskontrolle wird bevorzugt dann durchgeführt, wenn kein Objekt zwischen der ersten Sende-Empfangseinheit 10 und der zweiten Sende-Empfangseinheit 20 angeordnet ist. In diesem Fall kann der erste Lichtstrahl L1 ungehindert die zweite Sende-Empfangseinheit 20 erreichen. Entsprechendes gilt für den zweiten Lichtstrahl L2, der von der zweiten Sende-Empfangseinheit 20 emittiert wird. Die zur Fig. 3 gehörende Zeitskala t zeigt eine entsprechende Zeitinformation, welches die Auswerteeinheit 40 erfasst.

In dem ersten Zeitfenster Z1 wird der erste Lichtstrahl L1 von der ersten Sende-Empfangseinheit 10 emittiert. Dieser erste Lichtstrahl L1 wird ebenfalls im ersten Zeitfenster Z1 von der zweiten Sende-Empfangseinheit 20 empfangen. Um zu verdeutlichen, dass der erste Lichtstrahl L1 von der ersten Sende-Empfangseinheit 10 emittiert wird und ebenfalls im ersten Zeitfenster Z1 von der zweiten Sende-Empfangseinheit 20 empfangen wird, ist unterhalb der Zeitskala t die jeweils dazugehörige Sende-Empfangseinheit angedeutet. Zugleich gibt eine Pfeilspitze der angedeuteten Lichtstrahlen L1, L2 an, ob der jeweilige Lichtstrahl emittiert oder empfangen wird. Eine Pfeilspitze nach oben deutet ein Emittieren an, eine Pfeilspitze nach unten deutet ein Empfangen an. Diese Pfeilspitzen haben in den Figuren 1 und 2 dieselbe Bedeutung. Im zweiten Zeitfenster Z2 wird der zweite Lichtstrahl L2 emittiert und ebenfalls im zweiten Zeitfenster Z2 wird der zweite Lichtstrahl L2 von der ersten Sende-Empfangseinheit 10 empfangen. Damit kann die Auswerteeinheit 40 ein korrektes Funktionieren der Sicherungsvorrichtung 70 überprüfen. Diese Funktionskontrolle kann permanent durchgeführt werden, wenn kein Objekt zwischen den Sende-Empfangseinheiten 10, 20 vorhanden ist. Bevorzugt wird eine permanente Funktionskontrolle der Sicherungsvorrichtung 70 durchgeführt.

Die in den Fig. 1 und 3 gezeigten zeitlichen Abstände der jeweiligen Lichtstrahlen in demselben Zeitfenster sind in der Regel deutlich geringer als der vorgegebene Zeitabstand dt zwischen den beiden Zeitfenstern Z1 und Z2. Die zeitlichen Abstände der jeweiligen Lichtstrahlen in demselben Zeitfenster können weniger als 5 ns betragen. Im Vergleich zum vorgegebenen Zeitabstand dt (einige ms) können diese geringfügigen Zeitdifferenzen im Nanosekundenbereich vernachlässigt werden. Demzufolge empfängt in Fig. 3 die zweite Sende-Empfangseinheit 20 den ersten Lichtstrahl L1 unmittelbar nachdem er von der ersten Sende-Empfangseinheit 10 emittiert wird. Die Figuren 1 bis 3 zeigen jeweils schematisch anhand der Zeitskalen t welche Informationen die Auswerteeinheit 40 erfasst. Die Auswerteeinheit 40 kann dabei die empfangenen Informationen einem dieser dargestellten Zeitskalen t zuordnen. Dadurch kann die Auswerteeinheit 40 zum einen eine Funktionsfähigkeit der Sicherungsvorrichtung 70 überwachen und zugleich ein Vorhandensein eines Objekts zwischen der ersten und zweiten Sende-Empfangseinheit feststellen. Im Falle eines detektierten Objekts kann die Auswerteeinheit 40 darüber hinaus feststellen, ob das detektierte Objekt ein reflektierendes Objekt 31 oder ein nicht-reflektierendes Objekt 32 ist. Je nach Art des detektierten Objekts kann die Auswerteeinheit 40 unterschiedliche Steuersignale zum Ansteuern einer Maschine 50 erzeugen.

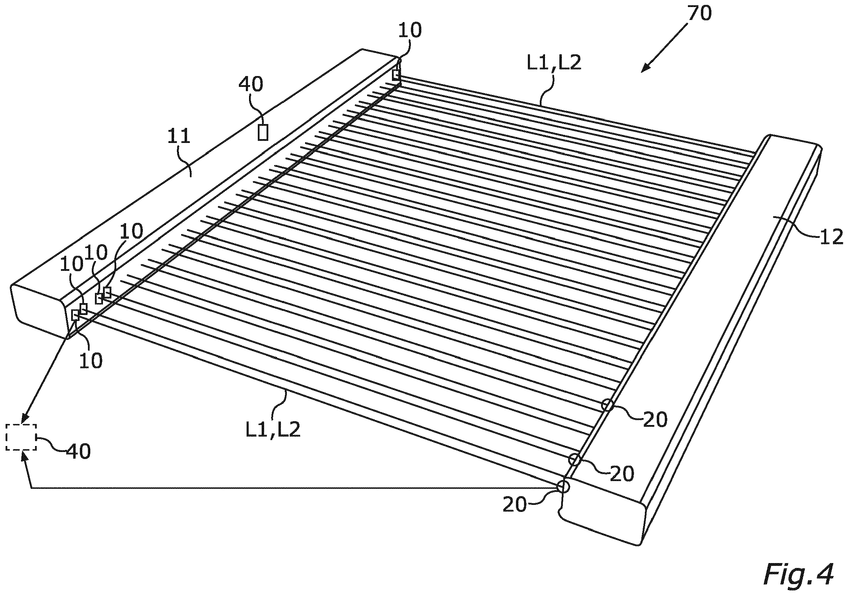

Fig. 4 zeigt beispielhaft eine Anordnung von mehreren ersten Sende-Empfangseinheiten 10 und mehreren zweiten Sende-Empfangseinheiten 20. Die mehreren ersten Sende-Empfangseinheiten 10 sind entlang einer Linie an einer ersten Leiterplatte 11 angeordnet. Die mehreren zweiten Sende-Empfangseinheiten 20 sind entlang einer Linie einer zweiten Leiterplatte 12 angeordnet. Zwischen diesen Sende-Empfangseinheiten sind beispielhaft die ersten und zweiten Lichtstrahlen L1, L2 angedeutet. Diese mehreren ersten und zweiten Lichtstrahlen spannen ein Lichtgitter beziehungsweise einen Lichtvorhang auf. Dieser Lichtvorhang ist in der Regel für das menschliche Auge nicht sichtbar. Die Auswerteeinheit 40 kann beispielsweise im Bereich der ersten Leiterplatte 11 oder zweiten Leiterplatte 12 angeordnet sein. Sie kann ebenso extern angeordnet sein. Die ersten und zweiten Sende-Empfangseinheiten 10, 20 können Informationen zur Auswerteeinheit 40 übertragen beziehungsweise die Auswerteeinheit 40 kann Informationen von den jeweiligen Sende-Empfangseinheiten abrufen. Die schematischen Funktionsprinzipien, welche in Figuren 1 bis 3 gezeigt sind, können sinngemäß und analog auf mehrere Sende-Empfangseinheiten übertragen werden. Bevorzugt entspricht eine Anzahl der ersten Sende-Empfangseinheiten 10 genau einer Anzahl von den zweiten Sende-Empfangseinheiten 20. Eine Anordnung der ersten Sende-Empfangseinheiten 10 ist bevorzugt kongruent zu einer Anordnung der zweiten Sende-Empfangseinheiten 20 ausgebildet.

Die Sicherungsvorrichtung 70 ist insbesondere mithilfe zweier gegenüberliegender Lichtgittereinheiten gleicher Größe realisiert. Die mehreren ersten Sende-Empfangseinheiten 10 können eine erste Lichtgittereinheit repräsentieren, die mehreren zweiten Sende-Empfangseinheiten 20 können eine zweite Lichtgittereinheit darstellen. Die Lichtstrahlen können gepulst mit definierter Dauer und Zeitintervall von beiden Lichtgittereinheiten zeitversetzt emittiert werden. Die Zeitsteuerung der Lichtstrahlen kann ein Ermitteln einer Existenz des Objekts ermöglichen. Ist beispielsweise an der ersten Sende-Empfangseinheit 10 kein Lichtsignal vorhanden, würde der zweite Lichtstrahl L2 unterbrochen werden. In diesem Fall kann auf ein nicht-reflektierendes Objekt im Strahlengang geschlossen werden. Mithilfe der in Fig. 3 dargestellten Funktionskontrolle kann ermittelt werden, ob die erste Sende-Empfangseinheit 10 einen Defekt aufweist. Wird bei der ersten Sende-Empfangseinheit 10 der erste reflektierte Lichtstrahl L1r empfangen, so deutet dies auf ein reflektierendes Objekt 31 hin. Diese Situation kann z.B. auf einen reflektierenden Handschuh oder ein reflektierendes Armband hindeuten. In diesem Fall erzeugt die Auswerteeinheit 40 bevorzugt ein Steuersignal zum sofortigen Abschalten der Maschine 50.

Die Auswerteeinheit 40 kann ferner feststellen, welche Seite eines Objekts reflektierend oder nicht-reflektierend ausgestaltet ist. So könnte zum Beispiel der erste reflektierte Lichtstrahl L1r von der ersten Sende-Empfangseinheit 10 empfangen werden, während die zweite Sende-Empfangseinheit 20 keinen Lichtstrahl empfängt. Dieses Szenario würde einer Überschneidung der Fig. 1 mit der Fig. 2 darstellen. An einer ersten Seite (links in Fig. 1 und 2) wäre das Objekt reflektierend, an einer zweiten Seite (rechts in Fig. 1 und 2) wäre das Objekt nicht-reflektierend, sofern kein Defekt der Sicherungsvorrichtung 70 vorliegt.

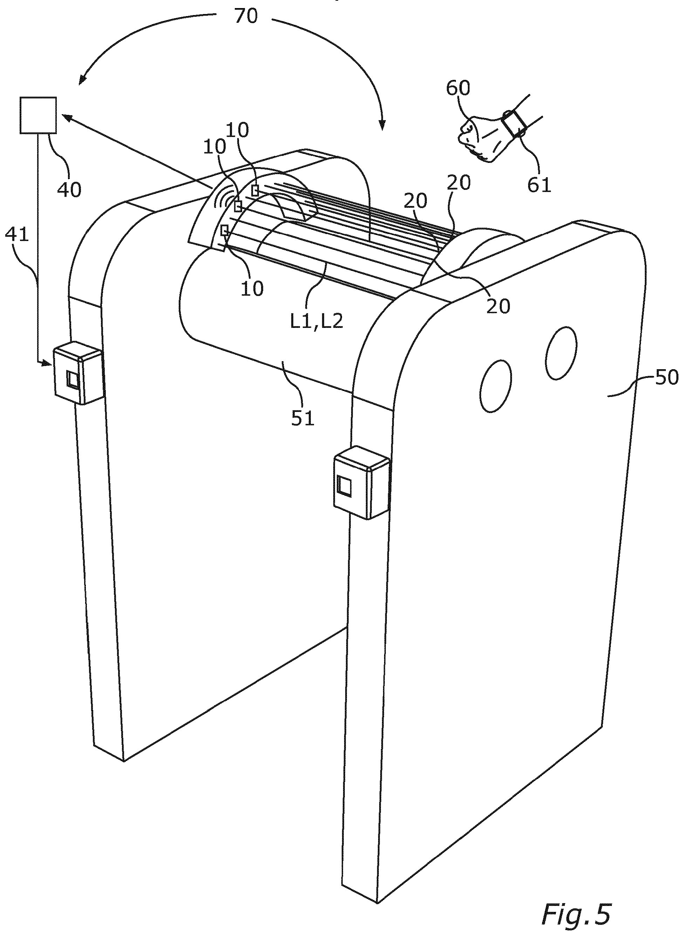

Die Fig. 5 zeigt beispielhaft die Sicherungsvorrichtung 70 mit der Maschine 50. Die Maschine 50 gemäß Fig. 5 weist zwei Walzen 51 auf. Diese Walzen 51 repräsentieren einen vorgegebenen Bereich 51 der Maschine 50. Der vorgegebene Bereich 51 ist insbesondere ein Gefahrenbereich, der für einen Benutzer große Risiken birgt. Um diesen vorgegebenen Bereich 51 ist schematisch ein halbkreisförmiges Lichtgitter angedeutet. Dieses Lichtgitter weist mehrere erste Sende-Empfangseinheiten 10 sowie mehrere zweite Sende-Empfangseinheiten 20 auf. Die Sende-Empfangseinheiten 10, 20 sind bevorzugt datentechnisch mit der Auswerteeinheit 40 verbunden. Somit kann zwischen den jeweiligen Sende-Empfangseinheiten 10, 20 und der Auswerteeinheit 40 ein Informationsaustausch stattfinden.

Die Fig. 5 zeigt schematisch eine Hand 60. Im Bereich eines Handgelenks ist ein Reflexionsarmband 61 angeordnet. In vielen Fällen ist vorgesehen, dass die Maschine 50 nur mithilfe des Reflexionsarmbands 61 oder einer anderen zu tragenden Reflexionseinheit aktiviert werden kann. Die Maschine 50 gemäß Fig. 5 lässt sich bevorzugt nur mithilfe des Reflexionsarmbands 61 aktivieren und betreiben. Eine weitere hier nicht dargestellte Überwachung kann zudem feststellen, ob der Benutzer das Reflexionsarmband 61 trägt. Würde sich die Hand 60 dem Lichtvorhang in Fig. 5 nähern, so würde zunächst das nicht-reflektierende Objekt 32 festgestellt werden. Die Hand 60 an sich ist in der Regel nicht-reflektierend ausgebildet. Mithilfe eines entsprechenden Reflexionshandschuhs kann jedoch ebenfalls die Hand 60 reflektierend ausgestaltet werden. Bei einer entsprechend großen Entfernung des Lichtgitters zu den in Fig. 5 dargestellten Walzen 51 muss bei einem Eindringen der Hand 60 in einen Bereich innerhalb des Lichtgitters noch nicht eine sofortige Abschaltung der Maschine erfolgen. So kann beispielsweise gewährleistet werden, dass ein Benutzer mit seiner Hand 60 Einstellungen an den jeweiligen Sende-Empfangseinheiten vornehmen kann.

Würde jedoch der Benutzer seine Hand 60 weiter in Richtung der Walzen 51 führen, so würde zwangsläufig das Reflexionsarmband 61 zwischen die erste Sende-Empfangseinheit und die zweite Sende-Empfangseinheit geführt werden. In diesem Fall würde zumindest eine der beiden Lichtstrahlen L1 oder L2 reflektiert werden. Die Auswerteeinheit 40 würde das in Fig. 1 gezeigte Szenario feststellen. Das Szenario gemäß der Fig. 1 übertragen auf das Beispiel von Fig. 5 würde bedeuten, dass ein äußerst kritischer Zustand eingetreten ist. Die Hand 60 des Benutzers nähert sich dem Gefahrenbereich der Maschine 50. Die Walzen 51 könnten die Hand 60 des Benutzers erfassen und so zu erheblichen Verletzungen führen. Um dieses unterwünschte Szenario zu verhindern, ist bevorzugt vorgesehen, dass die Auswerteeinheit 40 unverzüglich nach dem Feststellen des reflektierenden Objekts 31 ein erstes Steuersignal 41 erzeugt, welches die Maschine 50 sofort ausschaltet beziehungsweise deaktiviert.

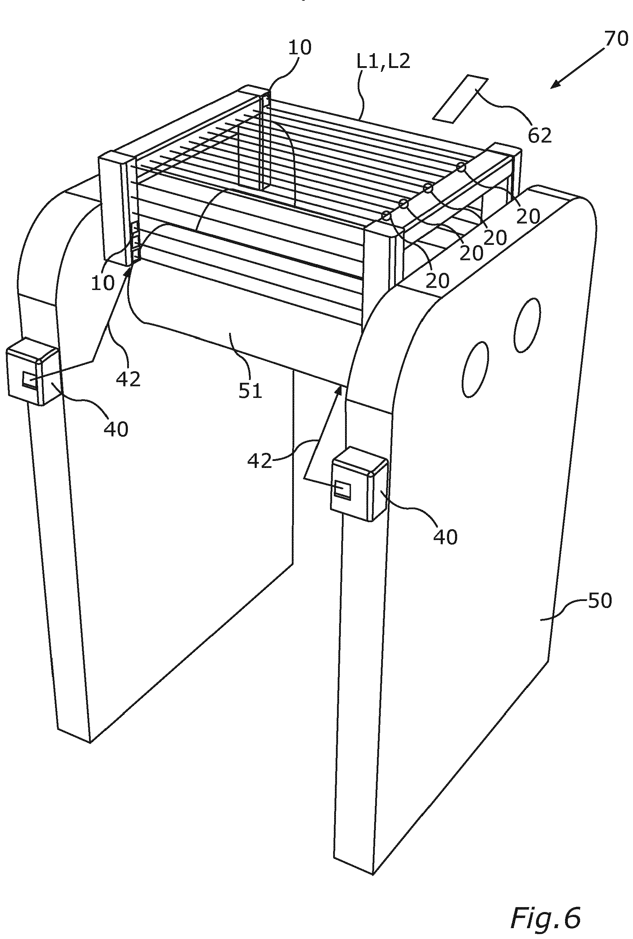

Fig. 6 zeigt die Maschine 50, bei der der vorgegebene Bereich 51 mithilfe eines U-förmigen Lichtgitters gesichert ist. Gemäß dem Beispiel von Fig. 6 können mehrere Auswerteeinheiten 40 an der Maschine 50 oder in deren Umgebung angeordnet sein. Die Auswerteeinheiten 40 können zusätzlich oder alternativ außerhalb der Maschine 50 angeordnet sein. Ebenfalls ist in Fig. 6 schematisch das für Menschen in der Regel nicht sichtbare Lichtgitter, gebildet durch die ersten und zweiten Lichtstrahlen L1 und L2 dargestellt.

Fig. 6 zeigt schematisch einen Roboterarm 62. Dieser Roboterarm 62 ist häufig als nicht-reflektierend ausgebildet. Somit stellt der Roboterarm 62 das nicht-reflektierende Objekt 32 dar. Nähert sich der Roboterarm 62 dem vorgegebenen Bereich 51, so passiert er zwangsläufig das Lichtgitter. In diesem Fall werden einzelne Lichtstrahlen des Lichtgitters hinsichtlich ihrer Ausbreitung beeinflusst. Unterbricht der Roboterarm 62 die ersten Lichtstrahlen L1 oder die zweiten Lichtstrahlen L2 zwischen der ersten und zweiten Sende-Empfangseinheit, so kann der erste Lichtstrahl L1 nicht die zweite Sende-Empfangseinheit 20 erreichen. In diesem Fall würde die Auswerteieinheit 40 die in Fig. 2 dargestellte Situation registrieren. Bevorzugt erzeugt die Auswerteeinheit 40 ein zweites Steuersignal 42. Dieses zweite Steuersignal 42 ist jedoch nicht dazu ausgebildet, die Maschine 50 auszuschalten. Dies liegt beispielsweise daran, dass es geradezu erwünscht ist, dass der Roboterarm 62 in den vorgegebenen Bereich 51 vordringt. Soll beispielsweise der Roboterarm 62 Stahlplatten zu den in Fig. 6 gezeigten Walzen führen, so ist es erforderlich, dass der Roboterarm 62 sich den Walzen 51 nähern kann, ohne dass dabei eine Abschaltung der Maschine 50 erfolgt.

In dieser Situation zeigt sich ein großer Vorteil der Erfindung. Die Sicherungsvorrichtung 70 ermöglicht nicht nur eine reine Objekterfassung zwischen der ersten Sende-Empfangseinheit 10 und der zweiten Sende-Empfangseinheit 20, sondern darüber hinaus kann der erfasste Objekt zumindest hinsichtlich seiner Reflexionseigenschaften näher klassifiziert werden. Mittels der Sicherungsvorrichtung 70 kann festgestellt werden, ob das Objekt reflektierend oder nicht-reflektierend ausgebildet ist. Würde sich im Beispiel der Fig. 6 die in Fig. 5 gezeigte Hand 60 mit dem Reflexionsband 61 der Maschine 50 nähern, so würde die Auswerteeinheit 40 anstelle des zweiten Steuersignals 42 das erste Steuersignal 41 erzeugen. In diesem Fall würde die Maschine 50 unverzüglich nach dem Feststellen des reflektierenden Objekts 31 abgeschaltet oder angehalten werden.

Die Figuren 5 und 6 zeigen beispielhaft, dass die mehreren ersten Sende-Empfangseinheiten 10 und mehreren zweiten Sende-Empfangseinheiten 20 unterschiedlich angeordnet sein können. Diese jeweiligen Anordnungen sind bevorzugt kongruent zueinander ausgebildet. Dies bedeutet insbesondere, dass eine erste Anordnung der mehreren ersten Sende-Empfangseinheiten 10 mithilfe einer Kongruenzabbildung in eine zweite Anordnung der mehreren zweiten Sende-Empfangseinheiten 20 überführt werden kann.

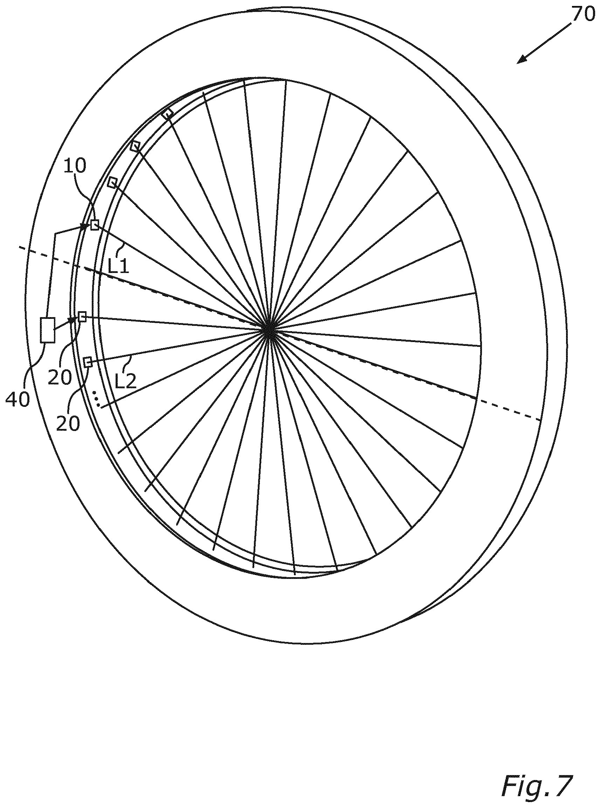

In Fig. 7 ist eine weitere mögliche Anordnung der mehreren ersten und zweiten Sende-Empfangseinheiten gezeigt. Die mehreren ersten Sende-Empfangseinheiten 10 sind entlang eines ersten Halbkreises angeordnet. Die mehreren zweiten Sende-Empfangseinheiten 20 sind entlang eines zweiten Halbkreises angeordnet. Daraus resultiert eine kreisförmige Anordnung der mehreren ersten und zweiten Sende-Empfangseinheiten 10, 20. Die in Fig. 7 gezeigte Anordnung der ersten Sende-Empfangseinheiten 10 kann mithilfe einer Punktspiegelung in die zweite Anordnung der mehreren zweiten Sende-Empfangseinheiten 20 überführt werden. Im Beispiel von Fig. 7 ist die Auswerteeinheit 40 innerhalb einer ringförmigen Leiterplatte angeordnet. Die jeweiligen Sende-Empfangseinheiten sind auf einer Innenseite der ringförmigen Leiterplatte angeordnet. Die in Fig. 7 gezeigte Anordnung der mehreren ersten und zweiten Sende-Empfangseinheiten 10, 20 kann beispielsweise im Bereich eines Rohres eingesetzt werden, in welches ein Benutzer nicht greifen darf.

Die Figuren 5 bis 7 zeigen deutlich, dass die mehreren ersten und zweiten Sende-Empfangseinheiten 10, 20 unterschiedlich angeordnet werden können. Bevorzugt wird die Anordnung der mehreren ersten und zweiten Sende-Empfangseinheiten 10, 20 in Abhängigkeit von dem vorgegebenen Bereich 51 der Maschine 50 gewählt. Mithilfe der mehreren ersten und zweiten Sende-Empfangseinheiten 10, 20 kann ein Lichtgitter beziehungsweise ein Lichtvorhang erzeugt werden, welcher den vorgegebenen Bereich 51 zuverlässig absichert. Dies bedeutet vor allem, dass es einem Benutzer nicht möglich ist, sich unerkannt dem vorgegebenen Bereich 51 zu nähern beziehungsweise unbemerkt von der Auswerteeinheit 40 in den vorgegebenen Bereich 51 einzudringen.

Damit ermöglicht die Sicherungsvorrichtung 70 eine selektive Erkennung von Objekten zwischen der ersten Sende-Empfangseinheit 10 und der zweiten Sende-Empfangseinheit 20. Die Anordnung der mehreren ersten und zweiten Sende-Empfangseinheiten 10, 20 kann geometrisch beliebig gestaltet werden. Bevorzugt entspricht die erste Anordnung der ersten Sende-Empfangseinheiten 10 der zweiten Anordnung der zweiten Sende-Empfangseinheiten 20. Diese beiden Anordnungen sind bevorzugt zueinander kongruent. So kann ein Lichtgitter für eine kreisförmige Öffnung realisiert werden, wie Fig. 7 zeigt.

Mithilfe einer Anordnung von vier Lichtgittern im 90° -Winkel oder einem geschlossenen Kreis für runde Öffnungen kann die Ansprechempfindlichkeit der Auswerteeinheit 40 nochmals erhöht werden. Mithilfe der Sicherungsvorrichtung 70 kann im Idealfall eine höhere Sicherheitsklasse für die Maschine 50 erreicht werden. Durch die Sicherungsvorrichtung 70 kann festgestellt werden, ob der erste Lichtstrahl L1 unterbrochen ist, von der gegenüberliegenden Sende-Empfangseinheit stammt oder der erste Lichtstrahl L1 durch Reflexion am reflektierenden Objekt 31 an der ersten Sende-Empfangseinheit 10 empfangen wird.

## Patentansprüche

1. Sicherungsvorrichtung (70) für eine Maschine (50), aufweisend
- eine erste Sende-Empfangseinheit (10) zum Emittieren eines ersten Lichtstrahls (L1) in einem ersten Zeitfenster (Z1) und zum Empfangen eines zweiten Lichtstrahls (L2),
- eine zweite Sende-Empfangseinheit (20) angeordnet zum Emittieren des zweiten Lichtstrahls (L2) in einem vom ersten verschiedenen zweiten Zeitfenster (Z2) und zum Empfangen des ersten Lichtstrahls (L1) **gekennzeichnet durch**
- eine Auswerteeinheit (40) ausgebildet
• zum Feststellen eines reflektierenden Objekts (31) zwischen der ersten Sende-Empfangseinheit (10) und der zweiten Sende-Empfangseinheit (20), nur wenn der erste Lichtstrahl (L1) von der ersten Sende-Empfangseinheit (10) in dem ersten Zeitfenster (Z1) oder der zweite Lichtstrahl (L2) von der zweiten Sende-Empfangseinheit (20) in dem zweiten Zeitfenster (Z2) empfangen wird, und
• zum Feststellen eines nicht-reflektierenden Objekts (32) zwischen der ersten Sende-Empfangseinheit (10) und der zweiten Sende-Empfangseinheit (20), nur wenn von keiner der beiden Sende-Empfangseinheiten (10, 20) in beiden Zeitfenstern (Z1, Z2) einer der beiden Lichtstrahlen (L1, L2) empfangen wird.

2. Sicherungsvorrichtung (70) nach Anspruch 1,
**dadurch gekennzeichnet, dass**
die Auswerteeinheit (40) ausgebildet ist zum Feststellen einer Funktionsfähigkeit der Sicherungsvorrichtung (70), nur wenn der erste Lichtstrahl (L1) von der zweiten Sende-Empfangseinheit (20) in dem ersten Zeitfenster (Z1) empfangen wird und/oder der zweite Lichtstrahl (L2) von der ersten Sende-Empfangseinheit (10) in dem zweiten Zeitfenster (Z2) empfangen wird.

3. Sicherungsvorrichtung (70) nach einem der voranstehenden Ansprüche,
**dadurch gekennzeichnet, dass**
die Auswerteeinheit (40) ausgestaltet ist,
basierend auf dem Feststellen des reflektierenden oder nicht-reflektierenden Objekts (31, 32) ein vorgegebenes Steuersignal (41, 42) für die Maschine (50) zu erzeugen.

4. Sicherungsvorrichtung (70) nach einem der voranstehenden Ansprüche,
**dadurch gekennzeichnet, dass**
das erste Zeitfenster (Z1) vom zweiten Zeitfenster (Z2) zeitlich durch einen vorgegebenen Zeitabstand (dt) getrennt ist, welcher bevorzugt eine Laufzeit des ersten Lichtstrahls (L1) von der ersten Sende-Empfangseinheit (10) zur zweiten Sende-Empfangseinheit (20) übersteigt.

5. Sicherungsvorrichtung (70) nach einem der voranstehenden Ansprüche mit mehreren ersten Sende-Empfangseinheiten (10) und mehreren zweiten Sende-Empfangseinheiten (20),
**dadurch gekennzeichnet, dass**
jeder ersten Sende-Empfangseinheit (10) eine zweite Sende-Empfangseinheit (20) zum Empfangen des ersten Lichtstrahls (L1) zugeordnet ist.

6. Sicherungsvorrichtung (70) nach Anspruch 5,
**dadurch gekennzeichnet, dass**
die mehreren ersten Sende-Empfangseinheiten (10) entlang einer ersten Linie angeordnet sind, die mehreren zweiten Sende-Empfangseinheiten (20) entlang einer zweiten Linie angeordnet sind und die erste Linie zur zweiten Linie kongruent ausgebildet ist.

7. Sicherungsvorrichtung (70) nach einem der Ansprüche 5 oder 6,
**dadurch gekennzeichnet, dass**
die mehreren ersten Sende-Empfangseinheiten (10) und die mehreren zweiten Sende-Empfangseinheiten (20) jeweils geradlinig, halbkreisförmig, kreisförmig, U-förmig und/oder rechteckig angeordnet sind.

8. Sicherungsvorrichtung (70) nach einem der voranstehenden Ansprüche mit einer Maschine (50), insbesondere eine Walzmaschine **dadurch gekennzeichnet, dass**
die Auswerteeinheit (40) ausgestaltet ist, im Falle des Feststellens des reflektierenden Objekts (31) die Maschine (50) abzuschalten.

9. Sicherungsvorrichtung (70) nach Anspruch 8 und 5,
**dadurch gekennzeichnet, dass**
die mehreren ersten und zweiten Sende-Empfangseinheiten (10, 20) derart angeordnet sind, dass ein vorgegebener Bereich (51) der Maschine (50) nur mittels des Feststellens des reflektierenden Objekts (31) und/oder des Feststellens des nicht-reflektierenden Objekts (32) zugänglich ist.

10. Verfahren zum Betreiben einer Sicherungsvorrichtung (70) für eine Maschine (50), beinhaltend **die Verfahrensschritte**
- Emittieren eines ersten Lichtstrahls (L1) in einem ersten Zeitfenster (Z1) mittels einer ersten Sende-Empfangseinheit (10), wobei die erste Sende-Empfangseinheit (10) zum Empfangen eines zweiten Lichtstrahls (L2) ausgebildet ist,
- Emittieren des zweiten Lichtstrahls (L2) in einem vom ersten verschiedenen zweiten Zeitfenster (Z2) mittels einer zweiten Sende-Empfangseinheit (20), wobei die zweite Sende-Empfangseinheit (20) zum Empfangen des ersten Lichtstrahls (L1) ausgebildet ist,
**gekennzeichnet durch**
- Feststellen eines reflektierenden Objekts (31) zwischen der ersten Sende-Empfangseinheit (10) und der zweiten Sende-Empfangseinheit (20), nur wenn der erste Lichtstrahl (L1) von der ersten Sende-Empfangseinheit (10) in dem ersten Zeitfenster (Z1) oder der zweite Lichtstrahl (L2) von der zweiten Sende-Empfangseinheit (20) in dem zweiten Zeitfenster (Z2) empfangen wird, und
- Feststellen eines nicht-reflektierenden Objekts (32) zwischen der ersten Sende-Empfangseinheit (10) und der zweiten Sende-Empfangseinheit (20), nur wenn von keiner der beiden Sende-Empfangseinheiten (10, 20) in beiden Zeitfenstern (Z1, Z2) einer der beiden Lichtstrahlen (L1, L2) empfangen wird.

11. Verfahren nach Anspruch 10,
**dadurch gekennzeichnet, dass**
das Emittieren des ersten Lichtstrahls (L1) zeitlich versetzt zum Emittieren des zweiten Lichtstrahls (L2) mit einem vorgegebenen Zeitabstand (dt) erfolgt.

12. Verfahren nach einem der Ansprüche 10 bis 11,
**dadurch gekennzeichnet, dass**
der erste Lichtstrahl (L1) und der zweite Lichtstrahl (L2) einander abwechselnd periodisch wiederholend emittiert werden.

13. Verfahren nach einem der Ansprüche 10 bis 12
**dadurch gekennzeichnet, dass**
eine Funktionsfähigkeit der Sicherungsvorrichtung (70) festgestellt wird, nur wenn der erste Lichtstrahl (L1) von der zweiten Sende-Empfangseinheit (20) in dem ersten Zeitfenster (Z1) empfangen wird und/oder der zweite Lichtstrahl (L2) von der ersten Sende-Empfangseinheit (10) in dem zweiten Zeitfenster (Z2) empfangen wird.

14. Verfahren nach einem der Ansprüche 10 bis 12
**dadurch gekennzeichnet, dass**
ein Fehlersignal erzeugt wird, wenn während einer vorgegebenen Zeitspanne keiner der beiden Lichtstrahlen (L1, L2) von der ersten Sende-Empfangseinheit (10) und/oder der zweiten Sende-Empfangseinheit (20) empfangen wird.

## Claims

1. A securing device (70) for a machine (50), comprising:
- a first transmitting-receiving unit (10) for emitting a first light beam (L1) in a first time window (Z1) and for receiving a second light beam (L2),
- a second transmitting-receiving unit (20) arranged for emitting the second light beam (L2) in a second time window (Z2) different from the first one, and for receiving the first light beam (L1),
**characterized by**
- an evaluation unit (40) formed
- for determining a reflecting object (31) between the first transmitting-receiving unit (10) and the second transmitting-receiving unit (20) only if the first light beam (L1) is received by the first transmitting-receiving unit (10) in the first time window (Z1) or the second light beam (L2) is received by the second transmitting-receiving unit (20) in the second time window (Z2), and
- for determining a non-reflecting object (32) between the first transmitting-receiving unit (10) and the second transmitting-receiving unit (20) only if one of the two light beams (L1, L2) is not received by any of the two transmitting-receiving units (10, 20) in both time windows (Z1, Z2).

2. The securing device (70) according to claim 1,
**characterized in that**
the evaluation unit (40) is formed for determining a functionality of the securing device (70) only if the first light beam (L1) is received by the second transmitting-receiving unit (20) in the first time window (Z1) and/or the second light beam (L2) is received by the first transmitting-receiving unit (10) in the second time window (Z2).

3. The securing device (70) according to any one of the preceding claims, **characterized in that**
the evaluation unit (40) is configured to
generate a preset control signal (41, 42) for the machine (50) based on the determination of the reflecting or non-reflecting object (31, 32).

4. The securing device (70) according to any one of the preceding claims,
**characterized in that**
the first time window (Z1) is temporally separated from the second time window (Z2) by a preset time interval (dt), which preferably exceeds a time of flight of the first light beam (L1) from the first transmitting-receiving unit (10) to the second transmitting-receiving unit (20).

5. The securing device (70) according to any one of the preceding claims with multiple first transmitting-receiving units (10) and multiple second transmitting-receiving units (20),
**characterized in that**
a second transmitting-receiving unit (20) for receiving the first light beam (L1) is associated with each first transmitting-receiving unit (10).

6. The securing device (70) according to claim 5,
**characterized in that**
the multiple first transmitting-receiving units (10) are arranged along a first line, the multiple second transmitting-receiving units (20) are arranged along a second line and the first line is formed congruent with the second line.

7. The securing device (70) according to any one of claims 5 or 6,
**characterized in that**
the multiple first transmitting-receiving units (10) and the multiple second transmitting-receiving units (20) are each linearly, semi-circularly, circularly, U-shaped and/or rectangularly arranged.

8. The securing device (70) according to any one of the preceding claims comprising a machine (50), in particular a rolling machine,
**characterized in that**
the evaluation unit (40) is configured to shut down the machine (50) in case of determination of the reflecting object (31).

9. The securing device (70) according to claim 8 and 5,
**characterized in that**
the multiple first and second transmitting-receiving units (10, 20) are arranged such that a preset area (51) of the machine (50) is only accessible by means of the determination of the reflecting object (31) and/or the determination of the non-reflecting object (32).

10. A method for operating a securing device (70) for a machine (50), including the method steps
- emitting a first light beam (L1) in a first time window (Z1) by means of a first transmitting-receiving unit (10), wherein the first transmitting-receiving unit (10) is formed for receiving a second light beam (L2),
- emitting the second light beam (L2) in a second time window (Z2) different from the first one, by means of a second transmitting-receiving unit (20), wherein the second transmitting-receiving unit (20) is formed for receiving the first light beam (L1),
**characterized by**
- determining a reflecting object (31) between the first transmitting-receiving unit (10) and the second transmitting-receiving unit (20) only if the first light beam (L1) is received by the first transmitting-receiving unit (10) in the first time window (Z1) or the second light beam (L2) is received by the second transmitting-receiving unit (20) in the second time window (Z2), and
- determining a non-reflecting object (32) between the first transmitting-receiving unit (10) and the second transmitting-receiving unit (20) only if one of the two light beams (L1, L2) is not received by any of the two transmitting-receiving units (10, 20) in both time windows (Z1, Z2).

11. The method according to claim 10,
**characterized in that**
the emission of the first light beam (L1) is effected temporally offset to the emission of the second light beam (L2) with a preset time interval (dt).

12. The method according to any one of claims 10 to 11,
**characterized in that**
the first light beam (L1) and the second light beam (L2) are alternately periodically repetitively emitted.

13. The method according to any one of claims 10 to 12,
**characterized in that**
a functionality of the securing device (70) is determined only if the first light beam (L1) is received by the second transmitting-receiving unit (20) in the first time window (Z1) and/or the second light beam (L2) is received by the first transmitting-receiving unit (10) in the second time window (Z2).

14. The method according to any one of claims 10 to 12,
**characterized in that**
an error signal is generated if none of the two light beams (L1, L2) is received by the first transmitting-receiving unit (10) and/or the second transmitting-receiving unit (20) during a preset time span.

## Revendications

1. Dispositif de sécurité (70) pour une machine (50), comprenant
- une première unité d'émission-réception (10) destinée à émettre un premier rayon lumineux (L1) dans un premier créneau temporel (Z1) et à recevoir un deuxième rayon lumineux (L2),
- une deuxième unité d'émission-réception (20) disposée pour émettre le deuxième rayon lumineux (L2) dans un deuxième créneau temporel (Z2) différent du premier et pour recevoir le premier rayon lumineux (L1), **caractérisé par**
- une unité d'interprétation (40) configurée
* pour constater la présence d'un objet réfléchissant (31) entre la première unité d'émission-réception (10) et la deuxième unité d'émission-réception (20) seulement lorsque le premier rayon lumineux (L1) est reçu par la première unité d'émission-réception (10) dans le premier créneau temporel (Z1) ou le deuxième rayon lumineux (L2) par la deuxième unité d'émission-réception (20) dans le deuxième créneau temporel (Z2), et
* pour constater la présence d'un objet non réfléchissant (32) entre la première unité d'émission-réception (10) et la deuxième unité d'émission-réception (20) seulement lorsque l'un des deux rayon lumineux (L1, L2) n'est reçu par aucune des deux unités d'émission-réception (10, 20) dans les deux créneaux temporels (Z1, Z2) .

2. Dispositif de sécurité (70) selon la revendication 1, **caractérisé en ce que** l'unité d'interprétation (40) est configurée pour constater une aptitude au fonctionnement du dispositif de sécurité (70) seulement lorsque le premier rayon lumineux (L1) est reçu par la deuxième unité d'émission-réception (20) dans le premier créneau temporel (Z1) et/ou le deuxième rayon lumineux (L2) est reçu par la première unité d'émission-réception (10) dans le deuxième créneau temporel (Z2).

3. Dispositif de sécurité (70) selon l'une des revendications précédentes, **caractérisé en ce que** l'unité d'interprétation (40) est équipée pour générer un signal de commande (41, 42) prédéfini pour la machine (50) en se basant sur la constatation de la présence de l'objet réfléchissant ou non réfléchissant (31, 32).

4. Dispositif de sécurité (70) selon l'une des revendications précédentes, **caractérisé en ce que** le premier créneau temporel (Z1) est séparé temporellement du deuxième créneau temporel (Z2) par un intervalle de temps (dt) prédéfini, lequel dépasse de préférence un temps de propagation du premier rayon lumineux (L1) de la première unité d'émission-réception (10) vers la deuxième unité d'émission-réception (20).

5. Dispositif de sécurité (70) selon l'une des revendications précédentes, comprenant plusieurs premières unités d'émission-réception (10) et plusieurs deuxièmes unités d'émission-réception (20), **caractérisé en ce qu'**une deuxième unité d'émission-réception (20) est associée à chaque première unité d'émission-réception (10) pour recevoir le premier rayon lumineux (L1).

6. Dispositif de sécurité (70) selon la revendication 5, **caractérisé en ce que** les plusieurs premières unités d'émission-réception (10) sont disposées le long d'une première ligne, les plusieurs deuxièmes unités d'émission-réception (20) sont disposées le long d'une deuxième ligne et la première ligne est configurée congruente par rapport à la deuxième ligne.

7. Dispositif de sécurité (70) selon l'une des revendications 5 ou 6, **caractérisé en ce que** les plusieurs premières unités d'émission-réception (10) et les plusieurs deuxièmes unités d'émission-réception (20) sont disposées respectivement en ligne droite, en forme de demi-cercle, en forme de cercle, en forme de U et/ou rectangulairement.

8. Dispositif de sécurité (70) selon l'une des revendications précédentes, comprenant une machine (50), notamment un laminoir, **caractérisé en ce que** l'unité d'interprétation (40) est équipée pour mettre la machine (50) hors circuit en cas de constatation de la présence d'un objet réfléchissant (31).

9. Dispositif de sécurité (70) selon les revendications 8 et 5, **caractérisé en ce que** les plusieurs premières et deuxièmes unités d'émission-réception (10, 20) sont disposées de telle sorte qu'une zone (51) prédéterminée de la machine (50) n'est accessible qu'au moyen de la constatation la présence de l'objet réfléchissant (31) et/ou de la constatation la présence de l'objet non réfléchissant (32).

10. Procédé pour faire fonctionner un dispositif de sécurité (70) pour une machine (50), comprenant les étapes suivantes
- émission d'un premier rayon lumineux (L1) dans un premier créneau temporel (Z1) au moyen d'une première unité d'émission-réception (10), la première unité d'émission-réception (10) étant configurée pour recevoir un deuxième rayon lumineux (L2),
- émission du deuxième rayon lumineux (L2) dans un deuxième créneau temporel (Z2) différent du premier au moyen d'une deuxième unité d'émission-réception (20), la deuxième unité d'émission-réception (20) étant configurée pour recevoir le premier rayon lumineux (L1), **caractérisé par**
- constatation de la présence d'un objet réfléchissant (31) entre la première unité d'émission-réception (10) et la deuxième unité d'émission-réception (20) seulement lorsque le premier rayon lumineux (L1) est reçu par la première unité d'émission-réception (10) dans le premier créneau temporel (Z1) ou le deuxième rayon lumineux (L2) par la deuxième unité d'émission-réception (20) dans le deuxième créneau temporel (Z2), et
- constatation de la présence d'un objet non réfléchissant (32) entre la première unité d'émission-réception (10) et la deuxième unité d'émission-réception (20) seulement lorsque l'un des deux rayons lumineux (L1, L2) n'est reçu par aucune des deux unités d'émission-réception (10, 20) dans les deux créneaux temporels (Z1, Z2) .

11. Procédé selon la revendication 10, **caractérisé en ce que** l'émission du premier rayon lumineux (L1) s'effectue décalée dans le temps d'un intervalle de temps (dt) prédéfini par rapport à l'émission du deuxième rayon lumineux (L2).

12. Procédé selon l'une des revendications 10 à 11, **caractérisé en ce que** le premier rayon lumineux (L1) et le deuxième rayon lumineux (L2) sont émis de manière répétitive périodiquement en alternance l'un de l'autre.

13. Procédé selon l'une des revendications 10 à 12, **caractérisé en ce que** l'aptitude au fonctionnement du dispositif de sécurité (70) est constatée seulement lorsque le premier rayon lumineux (L1) est reçu par la deuxième unité d'émission-réception (20) dans le premier créneau temporel (Z1) et/ou le deuxième rayon lumineux (L2) est reçu par la première unité d'émission-réception (10) dans le deuxième créneau temporel (Z2).

14. Procédé selon l'une des revendications 10 à 12, **caractérisé en ce qu'**un signal d'erreur est généré si aucun des deux rayons lumineux (L1, L2) n'est reçu par la première unité d'émission-réception (10) et/ou la deuxième unité d'émission-réception (20) pendant un intervalle de temps prédéfini.
